**Europäisches Patentamt**

**European Patent Office**

**Office européen des brevets**

(11) Veröffentlichungsnummer: **0 516 103 A1**

# EUROPÄISCHE PATENTANMELDUNG

(21) Anmeldenummer: **92108981.9**

(22) Anmeldetag: **27.05.92**

(51) Int. Cl.5: **B23Q 11/08**, B23B 3/16, B23B 3/30

(30) Priorität: **28.05.91 DE 4117472**

(43) Veröffentlichungstag der Anmeldung:
**02.12.92 Patentblatt 92/49**

(84) Benannte Vertragsstaaten:
**DE ES FR IT**

(71) Anmelder: **EMAG MASCHINENFABRIK GMBH
Austrasse 24
W-7335 Salach/Württemberg(DE)**

(72) Erfinder: **Hessbrüggen, Norbert
Sudetenstrasse 47/2
W-7321 Eschenbach(DE)**
Erfinder: **Dey, Hans Joachim, Dr.
Tälesweg 5
W-7332 Eislingen(DE)**
Erfinder: **Steinbach, Heinz
Schlatweg 16
W-7900 Ulm(DE)**

(74) Vertreter: **Zmyj, Erwin, Dipl.-Ing.
Rosenheimer Strasse 52
W-8000 München 80(DE)**

(54) **Drehmaschine mit mindestens einer Grundeinheit.**

(57) Eine Drehmaschine weist mindestens eine Grundeinheit auf, die aus zwei Maschinenbetten (4, 7) aufgebaut ist. Die Maschinenbetten sind als einstückige Einheit aus Reaktionsharzbeton gegossen und tragen die Bettführungen (5, 8) für einen in Richtung der Spindelachse (10) verschiebbaren Spindelkasten (6) und einen Werkzeugträgerschlitten (9) mit einem Werkzeugrevolver (3). Die Bettführungen stehen rechtwinklig zueinander. Jeder Spindelkasten weist einen Ansatz (15) auf, der die Länge des Verschiebeweges des Spindelkastens (6) aufweist und durch eine Trennwand (16) am vorderen Ende des Verschiebeweges greift, die rechtwinklig zur Spindelachse (10) angeordnet ist. Die Schaltachse (11) des Werkzeugrevolvers (3) ist unter einem Winkel zur Längsrichtung seiner Bettführung (8) angeordnet. Bei der Ausbildung einer Drehmaschine mit zwei Spindeln sind die Maschinenbetten (4) der Spindelkästen (6) großflächig miteinander verklebt und die Maschinenbetten (7) für die Werkzeugträgerschlitten (9) sind im rechten Winkel hierzu spiegelbildlich zueinander an den Maschinenbetten (4) angeordnet.

EP 0 516 103 A1

Fig. 1

Die Erfindung bezieht sich auf eine Drehmaschine mit mindestens einer Grundeinheit, umfassend eine antreibbare Werkzeugspindel, die in einem Spindelkasten drehbar gelagert ist, der auf einem Maschinenbett in Richtung der Spindellängsachse verschiebbar ist, sowie einen Werkzeugrevolver.

Bei einer bekannten Drehmaschine dieser Art (DE 38 34 342 A1) ist der Spindelkasten mit Hilfe eines Kreuzschlittensystems in Richtung zweier Hauptachsen, d.h. in Richtung der Spindelachse und quer hierzu verschiebbar, während der Werkzeugträger feststehend angeordnet ist. Dieser weist zwei um senkrecht zueinander stehende Achsen drehbare Revolverköpfe auf, bei denen die eine Achse in Richtung der Spindelachse und die andere Achse senkrecht zur Spindelachse angeordnet sind. Dies erfordert einen verhältnismäßig hohen Aufwand bei der Ausgestaltung des Werkzeugträgers. Weiterhin ist ein Kreuzschlittensystem für den Spindelkasten erforderlich, wobei das Kreuzschlittensystem bekannterweise nachteilig im bezug auf eine hohe Präzision ist. Obendrein wird ein verhältnismäßig großes Maschinenbett benötigt, auf dem sowohl das Kreuzschlittensystem mit seinen Führungen als auch der feststehende Werkzeugträger angeordnet ist, der aufgrund seiner Größe die Zugänglichkeit zum Spannfutter der Werkzeugspindel beeinträchtigt. Ein entscheidender Nachteil ist darin zu sehen, daß die bei der Bearbeitung der Werkstücke anfallenden Späne auf das große flache Maschinenbett fallen, auf dem das Kreuzschlittensystem für den Spindelkasten vorgesehen ist, so daß die Führungen dieses Kreuzschlittensystems durch die Späne beeinträchtigt sind, sofern nicht aufwendige und störanfällige Schutzvorrichtungen für die Führungen des Kreuzschlittensystems vorgesehen sind. Schutzvorrichtungen für Führungen bei Drehmaschinen bestehen üblicherweise aus teleskopartig ineinander schiebbaren und einander mit entsprechenden Dichtungen übergreifenden Abdeckblechen, die aufgrund dieser Ineinanderschiebbarkeit einem hohen Verschleiß unterliegen und deshalb störanfällig sind.

Aufgabe der Erfindung ist es, eine Grundeinheit für eine äußerst kompakte, leicht zu bedienende Drehmaschine zu schaffen, die auch bei einem hohen Späneanfall wenig störanfällig ist, eine Werkstückbearbeitung mit hoher Präzision gestattet und die die Voraussetzung für den Aufbau einer zweispindligen Drehmaschine schafft, wobei beim Aufbau einer zweispindligen Drehmaschine eine Beeinflussung zwischen den beiden Werkzeugspindeln weitgehend vermieden ist.

Diese Aufgabe wird ausgehend von einer Drehmaschine der eingangs erläuterten Art erfindungsgemäß dadurch gelöst, daß der Spindelkasten einen die Werkstückspindel aufnehmenden Ansatz mit einer parallel zur Spindelachse verlaufenden Begrenzungswand und einer dem Verschiebeweg des Spindelkastens entsprechenden Länge aufweist, der durch eine dem Querschnitt des Ansatzes angepaßte Öffnung in einer Trennwand hindurchgreift, die am vorderen Ende des Verschiebeweges des Spindelkastens rechtwinklig zur Werkstückspindel angeordnet ist, daß der Werkzeugrevolver auf einem Werkzeugträgerschlitten angeordnet ist, der auf dem Maschinenbett rechtwinklig zur Spindelachse verschiebbar ist und daß die Schaltachse des Werkzeugrevolvers unter einem Winkel zwischen 0° und 90°, vorzugsweise 45° zu seiner Bettführung angeordnet ist.

Durch die Ausbildung eines pinolenartigen Ansatzes am Spindelkasten, der die Werkzeugspindel aufnimmt und die Anordnung einer Trennwand, durch die dieser Ansatz bei seiner Verschiebung hindurchgreift, wird die Bettführung für den Spindelkasten gegen einen Späneanfall in besonders einfacher Weise genützt, da die feststehende Trennwand keine ineinanderschiebbaren, Verschleiß- und damit störanfällige Teile aufweist. Durch die rechtwinklig zueinander liegende Anordnung der Bettführungen des Spindelkastens und des Werkzeugträgerschlittens, wird in Verbindung mit dem Merkmal, wonach die Schaltachse des Werkzeugrevolvers unter einem Winkel zwischen 0° und 90°, vorzugsweise 45° zu seiner Bettführung angeordnet ist, eine besonders kompakte Bauweise erzielt, die eine leichte Zugänglichkeit bei der Frontbeladung der Werkzeugspindel ermöglicht. Da die Hauptbewegungen auf exakt ausführbaren Führungen erfolgen, ohne daß Kreuzschlitten notwendig wären, ist die Voraussetzung für eine hohe Präzsision bei der Bearbeitung der Werkstücke geschaffen.

Der Ansatz kann, da er nur in Richtung der Spindelachse zusammen mit dem Spindelkasten verschiebbar ist, jeden beliebigen Querschnitt haben. Es empfiehlt sich jedoch, daß der Ansatz kreiszylindrischen Querschnitt aufweist. Hierdurch ergibt sich eine einfache Ausbildung des Ansatzes und der Öffnung in der Trennwand.

Die Ausgestaltung der Grundeinheit in der weiter oben beschriebenen Art, insbesondere die rechtwinklige Anordnung der Bettführungen für den Spindelkasten und den Werkzeugträgerschlitten ergibt die Voraussetzung für eine weitere vorteilhafte Ausgestaltung, die darin besteht, daß die Abdeckung für die Bettführung des Werkzeugträgerschlittens ein feststehendes Abdeckblech und ein mit dem Werkzeugträgerschlitten fest verbundenes, über das feststehende Abdeckblech schiebbares Abdeckblech umfaßt. Hierdurch kann auch bei der Bettführung für den Werkzeugträgerschlitten die übliche Teleskopabdeckung, die eines der störanfälligsten Teile einer Drehmaschine ist, durch eine einfache Abdeckung ersetzt werden. Bei einer Doppelspindelanordnung, d.h. bei einer Verbindung zweier Maschineneinheiten dieser hier beschriebenen Art, umfaßt die Abdeckung für die Maschinenbetten der Werkzeugträgerschlitten ein mittleres feststehendes Abdeckblech und jeweils ein dem jeweiligen Werkzeugträgerschlitten zugeordnetes, fest mit diesem verbundenes Abdeckblech, das über das feststehende Blech schiebbar ist. Diese einfache Abdeckung der Bettführung für den Werkzeugträgerschlitten ist ein weiterer Beitrag, die Maschine hinsichtlich des Späneanfalls möglichst unanfällig bei einfacher Ausgestaltung der Schutzvorrichtungen zu gestalten.

Wenn in weiterer Ausgestaltung der Erfindung die Bettführung für den Spindelkasten als Flachbettführung und die Bettführung für den Werkzeugträgerschlitten als Schrägbettführung ausgebildet ist, so wird hierdurch nicht nur die Grundeinheit besonders kompakt mit sehr guter Beladungsmöglichkeit für die Spindel, sondern es ergibt sich auch eine geneigte Schutzabdeckung für die Bettführung des Werkzeugträgerschlittens, wodurch ein Abrutschen der anfallenden Späne auf der konstruktiv einfachen Schutzabdeckung einen Spänestau verhindert.

Besonders gute Voraussetzungen für die Erzielung einer hohen Präzision bei der Bearbeitung von Werkstücken werden auch noch dadurch geschaffen, daß beide Maschinenbetten rechtwinklig zueinander stehend als einstückige Einheit aus Reaktionsharzbeton gegossen sind, weil sich hierdurch besonders gute Dämpfungseigenschaften erzielen lassen.

Eine solche Grundeinheit bietet die Voraussetzung für die Schaffung einer Drehmaschine mit zwei Spindelkästen. Bei einer solchen Ausgestaltung sind die die Spindelkästen tragenden Maschinenbetten großflächig miteinander verliebt. Aufgrund der Ausgestaltung einer Grundeinheit im wesentlichen in L-Form, ergibt sich aus der Aneinanderfügung zweier solcher Grundeinheiten eine Drehmaschine mit zwei Werkstückspindeln, die äußerst kompakt ist, eine besonders gute Beladungsmöglichkeit für die Werkstückspindeln bietet und obendrein eine gegenseitige Beeinflussung beider Werkstückspindeln aufgrund der großflächigen Verklebung weitgehend ausschließt. Durch die Klebeschicht wird eine gute Sperrwirkung hinsichtlich der Schwingungsübertragung von einer Einheit auf die andere erzielt. Besonders vorteilhaft ist die Tatsache, daß auch bei einer Ausgestaltung mit zwei Spindeln, bei der zwei solcher Grundeinheiten zusammengefügt sind, eine Beeinträchtigung durch Späneanfall für die Bettführungen vermieden ist.

Eine besonders vorteilhafte Ausgestaltung nach der vorliegenden Erfindung ist dann gegeben, wenn die Schrägbettführung durch stufenförmige Ausbildung des Maschinenbettes mit horizontalen Aufnahmeflächen für die Anordnung der Führungsleisten gebildet ist, deren Stützflächen horizontal angeordnet sind.

Hierdurch ist eine äußerst genaue Bearbeitung der Bettführung gegeben und obendrein ist die Herstellung besonders vereinfacht, da exakt gefertigte Führungsleisten auf die horizontalen Aufnahmeflächen des Maschinenbettes angebracht werden können. Dabei ist die Einfachheit der Herstellung und die Präzision der angeordneten Führungsleisten wesentlich vorteilhafter als dies bei den bisher bekannten Schrägbettführungen mit hierzu geneigten Führungsleisten der Fall ist.

Wenn jede Werkstückspindel als Motorspindel ausgebildet ist, so wird hierdurch der Platzbedarf für eine Grundeinheit und damit auch bei der zweispindligen Maschine gesenkt.

Eine besonders kompakte Ausgestaltung und eine gute Zugänglichkeit bzw. eine gute Beobachtungsmöglichkeit bei der Bearbeitung ergibt sich, wenn der Werkzeugrevolver als Kronenrevolver ausgebildet ist.

Die Erfindung wird nachstehend anhand eines in der Zeichnung dargestellten Ausführungsbeispieles näher erläutert. In dieser zeigen:

Figur 1:    eine Draufsicht auf eine Drehmaschine; und

Figur 2:    eine Seitenansicht der Maschine nach Figur 1.

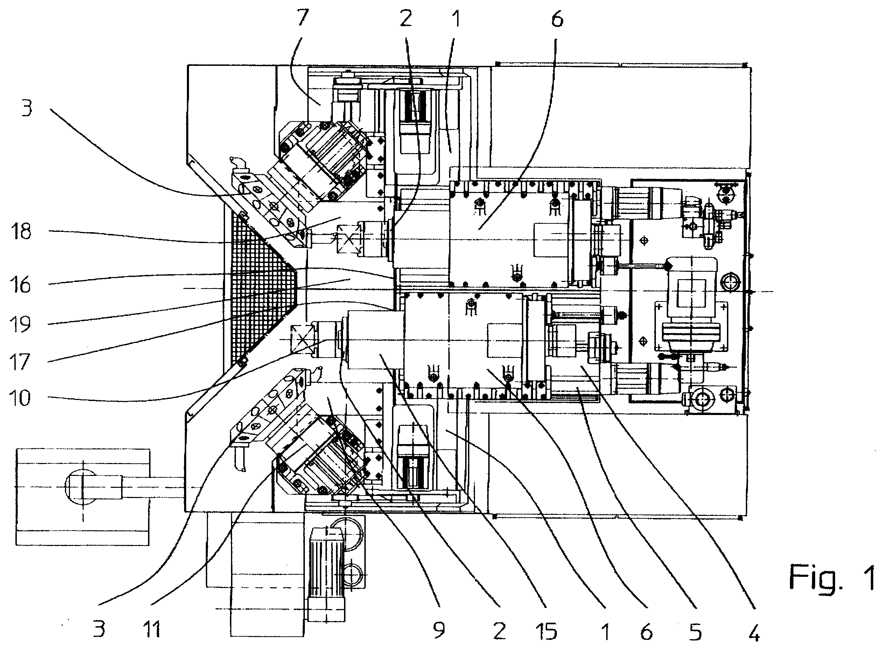

Wie aus Figur 1 ersichtlich, sind zwei Grundeinheiten 1 mit jeweils einer Werkstückspindel 2 und jeweils einem Werkzeugrevolver 3 zu einer zweispindligen Maschine zusammengefaßt. Da die Grundeinheiten untereinander gleich, jedoch nur spiegelbildlich ausgeführt sind, sind die Bezugszahlen in beiden Grundeinheiten identisch vorgesehen.

Jede Grundeinheit weist ein Maschinenbett 4 mit Bettführung 5 für einen die Werkstückspindel 2 aufnehmenden Spindelkasten 6 und ein Maschinenbett 7 mit Bettführung 8 für einen Werkzeugträgerschlitten 9 auf, der den Werkzeugrevolver 3 trägt.

Die beiden Maschinenbetten 4 und 7 sind in L-Form ausgebildet und großflächig miteinander verliebt und bestehen aus Reaktionsharzbeton. Die jeweiligen Bettführungen 5 und 8 stehen rechtwinklig zueinander, wobei der Spindelkasten 6 auf der als Flachbettführung ausgeführten Bettführung 5 in Richtung der Spindelachse 10 verschiebbar geführt ist, während der Werkzeugträgerschlitten 9 auf der als Schrägbettführung ausgeführten Bettführung 8 rechtwinklig zur Spindelachse verschiebbar ist. Die Schaltachse 11 des Werkzeugrevolvers 3 liegt unter einem Winkel von 45° zur Spindelachse 10 bzw. zur Längsrichtung der Bettführung 8. Der Werkzeugrevolver 3 ist als Kronenrevolver ausgebildet, wodurch in Verbindung mit der schräg angeordneten Schaltachse 11 und der Schrägbettführung für den Werkzeugträgerschlitten 9 eine äußerst kompakte Bauweise entsteht, die ein einfaches Beladen der Werkstückspindel 2 von vorne gestattet.

Der Spindelkasten 6 ist mit einem zylinderförmigen Ansatz 15 versehen, der die Werkstückspindel aufnimmt. Mit diesem Ansatz 15 greift der Spindelkasten 6 durch eine rechtwinklig zur Spindelachse 10 stehende Trennwand 16, die eine dem Querschnitt des Ansatzes 15 entsprechende Öffnung 17 aufweist. Die Trennwand 16 ist am vorderen Ende des Verschiebeweges des Spindelkastens 6 angeordnet, wodurch die Bettführung 5 gegen Späneanfall geschützt ist.

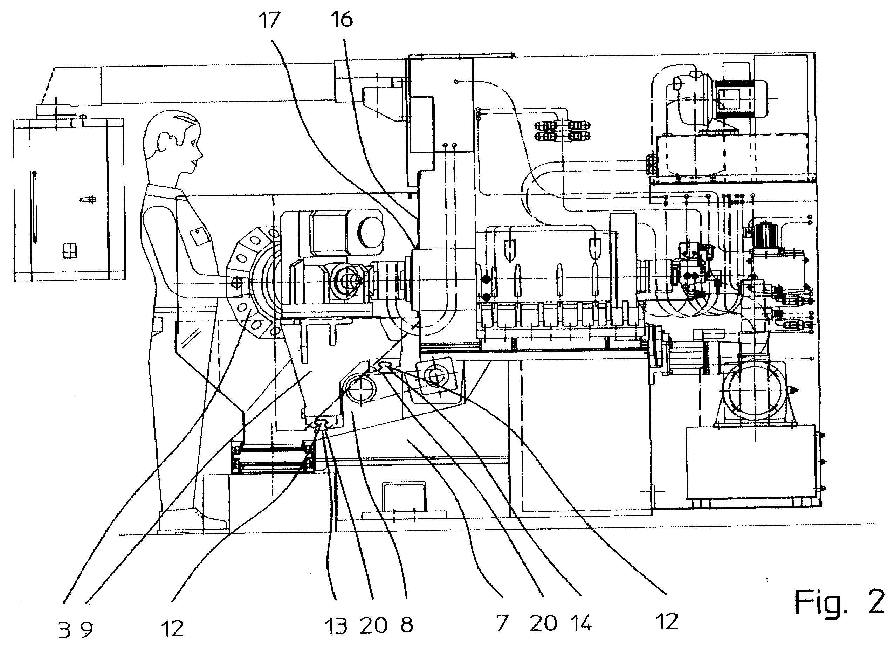

Aus der Darstellung in den Figuren 1 und 2 ist erkennbar, daß der Spindelkasten verhältnismäßig kurz ist, was darauf zurückzuführen ist, daß eine Motorspindel installiert ist.

Die Schrägbettführung für den Werkzeugträgerschlitten 9 ist von besonderer Art, denn die Führungsleisten 12 der Bettführung 8 sind auf stufenförmig angeordneten horizontalen Aufnahmeflächen 20 angebracht und weisen Stützflächen 13 und Führungsflächen 14 auf, wobei die Stützflächen 13 horizontal angeordnet sind.

Diese Schrägbettführung bringt den Vorteil mit sich, daß hier eine einfache Schutzabdeckung für die Führungen möglich ist. Wie aus Figur 1 ersichtlich, ist jeder Werkzeugträgerschlitten 9 mit einem fest mit diesem verbundenen Abdeckblech 18 versehen, das über ein feststehendes Abdeckblech 19 verschiebbar ist, wodurch die Schutzabdeckung nur aus zwei Teilen, nämlich einem feststehenden und einem mit dem Werkzeugträgerschlitten verbundenen Abdeckblech besteht.

Die Erstellung einer zweispindligen Drehmaschine ist insofern einfach, als zwei Grundeinheiten 1 an den Maschinenbetten 4 für den Spindelkasten 6 großflächig miteinander verklebt sind. Hierdurch entsteht eine zweispindlige Maschine, die sehr kompakt ausfällt und besonders leicht zugänglich bei der Beladung ist. Da die Führungen jeder Grundeinheit auf einem gesonderten Bett ausgebildet sind, wobei die Grundeinheiten miteinander großflächig verklebt sind, ist eine gegenseitige Beeinflussung derjenigen Maschinenteile, die auf den verschiedenen Grundeinheiten ausgeführt sind, weitgehend ausgeschlossen. Außerdem ist die präzise Herstellung dieser Bettführungen insbesondere in ihrer gegenseitigen Zuordnung vereinfacht, so daß sich aus diesen vorteilhaften Eigenschaften eine Maschine für Herstellung von Präzisionsteilen ergibt.

**Patentansprüche**

1. Drehmaschine mit mindestens einer Grundeinheit, umfassend eine antreibbare Werkzeugspindel, die in einem Spindelkasten drehbar gelagert ist, der auf einem Maschinenbett in Richtung der Spindellängsachse verschiebbar ist, sowie einen Werkzeugrevolver, **dadurch gekennzeichnet,** daß der Spindelkasten (6) einen die Werkstückspindel (2) aufnehmenden Ansatz (15) mit einer parallel zur Spindelachse (10) verlaufenden Begrenzungswand und einer dem Verschiebeweg des Spindelkastens entsprechenden Länge aufweist, der durch eine dem Querschnitt des Ansatzes angepaßte Öffnung (17) in einer Trennwand (16) hindurchgreift, die am vorderen Ende des Verschiebeweges des Spindelkastens rechtwinklig zur Werkstückspindel (2) angeordnet ist, daß der Werkzeugrevolver (3) auf einem Werkzeugträgerschlitten (9) angeordnet ist, der auf dem Maschinenbett (7) rechtwinklig zur Spindelachse (10) verschiebbar ist, und daß die Schaltachse (11) des Werkzeugrevolvers (3) unter einem Winkel zwischen 0° und 90°, vorzugsweise 45°, zu seiner Bettführung (8) angeordnet ist.

2. Drehmaschine nach Anspruch 1, dadurch gekennzeichnet, daß der Ansatz (15) kreiszylindrischen Querschnitt aufweist.

3. Drehmaschine nach Anspruch 1 oder 2, dadurch gekennzeichnet, daß die Abdeckung für die Bettführung (8) des Werkzeugträgerschlittens (9) ein feststehendes Abdeckblech (19) und ein mit dem Werkzeugträgerschlitten (9) fest verbundenes, über das feststehende Abdeckblech (19) schiebbares Abdeckblech (18) umfaßt.

4. Drehmaschine nach einem der Ansprüche 1 bis 3, dadurch gekennzeichnet, daß die Bettführung (5) für den Spindelkasten (6) als Flachbettführung und die Bettführung (8) für den Werkzeugträgerschlitten (9) als Schrägbettführung ausgebildet ist.

5. Drehmaschine nach Anspruch 4, dadurch gekennzeichnet, daß die Schrägbettführung (8) durch stufenförmige Ausbildung des Maschinenbettes mit horizontalen Aufnahmeflächen für die Anordnung der Führungsleisten (12) gebildet ist, deren Stützflächen (13) horizontal angeordnet sind.

6. Drehmaschine nach einem der Ansprüche 1 bis 5, dadurch gekennzeichnet, daß beide Maschinenbetten (4, 7) rechtwinklig zueinander stehend als einstückige Einheit aus Reaktionsharzbeton gegossen sind.

7. Drehmaschine nach einem der Ansprüche 1 bis 6, dadurch gekennzeichnet, daß zwei Grundeinheiten (1) zusammengefaßt sind, wobei die die Spindelkästen (6) tragenden Maschinenbetten (4) großflächig miteinander verklebt sind und die Maschinenbetten (7) für die Werkzeugträgerschlitten (9) spiegelbildlich zueinander an den Maschinenbetten (4) für die Spindelkästen (6) angeordnet sind.

8. Drehmaschine nach einem der Ansprüche 1 bis 7, dadurch gekennzeichnet, daß jede Werkstückspindel (2) als Motorspindel ausgebildet ist.

9. Drehmaschine nach einem der Ansrüche 1 bis 8, dadurch gekennzeichnet, daß der Werkzeugrevolver (3) als Kronenrevolver ausgebildet ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-528 489 (PROCEDES MINERVA) | 1,2,4,8, 9 | B23Q11/08 B23B3/16 |
| A | * Seite 1, Zeile 83 - Seite 2, Zeile 6; Abbildungen 1,3 * <br> --- | 3 | B23B3/30 |
| Y | DE-A-3 400 082 (INDEX-WERKE) <br><br> * Seite 13, Zeile 5 - Zeile 20; Abbildung 8 * <br> --- | 1,2,4,8, 9 | |
| A | US-A-4 719 676 (SANSONE) <br> * Spalte 6, Zeile 6 - Zeile 15; Abbildungen 6,7 * | 4,7-9 | |

-----

|  | RECHERCHIERTE SACHGEBIETE (Int. Cl.5) |
|---|---|
| | B23Q <br> B23B |

Der vorliegende Recherchenbericht wurde für alle Patentansprüche erstellt

| Recherchenort | Abschlußdatum der Recherche | Prüfer |
|---|---|---|
| DEN HAAG | 04 SEPTEMBER 1992 | LJUNGBERG R. |